# EUROPÄISCHE PATENTSCHRIFT

(11) **EP 1 228 738 B1**
(45) Veröffentlichungstag und Bekanntmachung des Hinweises auf die Patenterteilung: **29.03.2006**
(21) Anmeldenummer: 02000013.9
(22) Anmeldetag: 02.01.2002
(51) Int. Cl.: A61C 19/00

(54) **Lichthärtgerät mit einer Halbleiter-Strahlungsquelle in Wärmeleitverbindung mit einem Basiskörper**
Light curing apparatus with semiconductor light source connected to a base body via thermal conductor
Appareil pour la photopolymérisation avec source de rayonnement par semi-conducteur connectée à un corps de base par thermoconducteur

(30) Priorität: 01.02.2001 DE 10104579
(43) Veröffentlichungstag der Anmeldung: 07.08.2002
(73) Patentinhaber: Firma Ivoclar Vivadent AG, 9494 Schaan (LI)
(72) Erfinder: Plank, Wolfgang, 6830 Rankweil (AT)
(74) Vertreter: Baronetzky, Klaus

(56) Entgegenhaltungen:
- EP-A- 0 879 582
- EP-A- 1 090 607
- WO-A-99/35995
- US-A- 5 634 711
- US-A- 5 660 461
- US-A- 5 698 866
- US-B1- 6 331 111

## Beschreibung

Die Erfindung betrifft ein Lichthärtgerät gemäß dem Oberbegriff von Anspruch 1.

Lichthärtgeräte im Dentalbereich sind heutzutage entweder als Handgeräte für die unmittelbare Lichtpolymerisation im Mund des Patienten oder als stationäre Geräte ausgebildet.

Gerade bei Handgeräten ist es wichtig, dass die Polymerisation rasch vorgenommen werden kann, allein schon, um in dem begrenzten zur Verfügung stehenden Zeitraum eine vollständige Durchpolymerisation auch größerer Zahnfüllungen aus lichthärtbarem Kunststoff zu gewährleisten.

Überwiegend weisen die Lichthärtgeräte eine Halogenglühlampe mit integriertem Reflektor auf, deren Strahlengang einem Lichtleiterstab zugeleitet wird, dessen Lichtaustritt unmittelbar auf die zu härtende Füllung gerichtet wird. Die üblichen lichthärtenden Dentalkunststoffe weisen eine spektrale Empfindlichkeit auf, deren Maximum im Bereich des sichtbaren Lichts liegt.

Andererseits senden handelsübliche Halogenglühlampen sichtbares Licht mit ganz geringen UV-Anteilen von z.H. 2% aus. Um die Wirksamkeit der Strahlungsbeaufschlagung zu verbessern, ist versucht worden, die spektrale Empfindlichkeit der zu polymerisierenden Kunststoffe in den langwelligeren Bereich zu verlagern. Dies gelingt jedoch nur in begrenztem Maße.

Ferner ist es vorgeschlagen worden, über für höherwelliges Licht durchlässige Filter den emittierten Spektralbereich zu höheren Frequenzen zu verlagern. Bei dieser Lösung muss jedoch zunächst recht viel Strahlungsenergie erzeugt werden, so dass der Wirkungsgrad entsprechend schlecht ist. Regelmäßig muss zudem ein Kühlgebläse eingesetzt werden, das die Temperatur des Lichthärtgeräts begrenzt, aber einen für Zahnarzt und/oder Patienten unangenehmen Luftstrom erzeugt.

Ferner sind auch seit längerem Lichthärtgeräte bekannt geworden, die mit Halbleiter-Strahlungsquellen wie LEDs arbeiten. Beispielsweise ist aus der DE-GM 295 11 927 ein Lichthärtgerät bekannt geworden, dass eine im blauen Spektralbereich emittierende Leuchtdiode verwendet, die von einer Batterie oder einem Akkumulator gespeist wird.

Ferner ist es auch bereits vorgeschlagen worden, mehrere LEDs für die Speisung des Lichtleiterstabs zu verwenden. Hierdurch lässt sich die Lichtabgabe des Lichthärtgeräts verbessern. Unabhängig davon, ob die LEDs als Modul, also in einem gemeinsamen Kunststoffgehäuse, oder als Einzel-LEDs, also jeweils in einem Kunststoffgehäuse angeordnet sind und strahlen, ist ihre Lichtabgabe begrenzt. Die Kunststoffumhüllung wirkt nicht nur elektrisch isolierend, sondern dämmt auch die Wärmeabgabe, so dass auch bei Kühlung des Kunststoffgehäuses von aussen eine bestimmte Leistungsdichte des je lichtaussendenden Chips nicht überschritten werden sollte.

Ferner ist es auch in anderem Zusammenhang bereits vorgeschlagen worden, Chips zur Lichtabgabe auf einen metallischen Körper aufzukleben. Zwar ist bei einer derartigen Lösung der Wärmewiderstand zwischen Chip und Kühlkörper geringer als bei Integration in einem Kunststoffmodul. Dennoch wirkt auch hier die Klebstoffschicht als Wärmesperre, so dass auch hier die Gefahr der Überhitzung des oder der Chips besteht.

Schließlich ist es auch bei der Montage von Halbleitern auf Kühlkörpern seit langem bekannt, eine Wärmeleitpaste zu verwenden. Die Wärmeleitpaste soll eine etwaige isolierende Luftschicht verdrängen, die aufgrund der Oberflächenrauhigkeitmetallischer Oberflächen als Wärmeleitsperre wirkt. Trotz aller Bemühungen weisen jedoch die bekannten Lichthärtgeräte mit Halbleiter-Strahlungsquellen eine begrenzte Lichtabgabe auf und sind insofern für die zahnärztliche Praxis nicht besonders geeignet.

Das Dokument WO 99/35995 offenbart ein lichthärtgerät gemäß den Oberbegriff von Anspruch 1.

Daher liegt der Erfindung die Aufgabe zugrunde, ein Lichthärtgerät gemäß dem Oberbegriff von Anspruch 1 zu schaffen, das die Lichthärtzeit verkürzt, so dass eine gesondert starke Erwärmung gerade auch im Mund des Patienten nicht stattfinden kann.

Diese Aufgabe wird erfindungsgemäß durch Anspruch1 gelöst. Vorteilhafte Weiterbildungen ergeben sich aus den Unteransprüchen.

Erfindungsgemäß ist es besonders günstig, dass im wesentlichen kaltes Licht benutzt wird. Es wird eine geringere Beleuchtungsstärke eingesetzt, wobei die langwelligen Strahlungsanteile unterdrückt werden, so dass die Intensität der Bestrahlung im Vergleich zum Stand der Technik höher ist.

Die erfindungsgemäße Lösung erlaubt überraschend ein vermindertes Temperaturniveau auch im Mund des Patienten. Durch die intensivierte Strahlung lässt sich zunächst die Behandlungszeit verkürzen, so dass im Bereich der Füllung eine geringere Erwärmungszeit besteht. Darüberhinaus ist aber auch das Temperaturniveau des Lichthärtgeräts selbst überraschend deutlich geringer, so dass auch von dieser Seite her keine besonders intensive Erwärmung stattfindet.

Die entstehende Strahlungswärme auf dem Chip wird über die erfindungsgemäße Wärmeleitverbindung sofort auf einen recht großen Basiskörper abgeleitet. Dieser Basiskörper wird dann zwar erwärmt. Er kann jedoch zum einen recht gut gekühlt werden, nachdem er eine recht große Oberfläche aufweisen kann.

Aufgrund-seiner Masse hat er aber insbesondere eine hohe Wärmekapazität, so dass durch die vorzeitige Einspeisung von Wärmeenergie im Bereich weniger Sekunden seine Temperatur nur um ein geringes Maß erhöht wird.

In vorteilhafter Ausgestaltung ist es vorgesehen, die Wärme von dem Basiskörper über eine sogenannte Heatpipe nach hinten zu leiten. Dort kann sie praktisch von der Umgebungsluft abgeführt werden, so dass bei dieser Lösung sogar gebläselos gearbeitet werden kann.

In einer weiteren, besonders bevorzugten Ausgestaltung ist es vorgesehen, jeden Chip in einer Mulde in dem Basiskörper gegenüber der Oberfläche versenkt anzuordnen. Diese Lösung hat einen noch weiter verbesserten Lichtwirkungsgrad zur Folge. Die Mulde ist bevorzugt innen verspiegelt und wirkt als MikroReflektor, wobei die Oberfläche des lichtabgebenden Chips im Brennpunkt des so gebildeten Mikroreflektors angeordnet sein kann. Die zur Seite emittierte Strahlung lässt sich auf diese Weise focussieren, so dass die Lichtverluste durch Fehlleitung der Strahlung deutlich reduziert sind.

Gemäß einer weiteren bevorzugten Ausgestaltung der Erfindung sind derartige Mikroreflektoren mit integrierten Chips gleichmäßig verteilt auf der Oberfläche des Basiskörpers vorgesehen. Die hierdurch erzeugte Strahlung wird gebündelt nach vorne, also zum Behandlungsort hin abgestrahlt, wobei sich die Einzelstrahlenbündel überlappen und mischen.

In diesem Zusammenhang ist es auch möglich, verschiedene Farben der Emissionsspektren der Einzelchips vorzusehen und je eine Einzelsteuerung vorzunehmen. Beispielsweise kann auch gezielt Rotlicht abgegeben werden, wenn in einer modifizierten Ausgestaltung des erfindungsgemäßen Lichthärtgeräts eine Wärmebehandlung durchgeführt werden soll.

Besonders günstig bei der Realisierung der erfindungsgemäßen Einzelstrahlungsquellen ist die Verwendung doppelter Anschlußdrähte. Die erfindungsgemäß besonders lichtintensiven Chips erfordern hohe Versorgungsströme, und es hat sich als ausreichend herausgestellt, wenn zwei Golddrähte bzw. Aluminiumdrähte von je 30 *µ*m zwischen der Versorgungsleitung und dem Chip verwendet werden.

In einer weiteren bevorzugten Ausgestaltung, die gerade auch für Hochleistungschips geeignet ist, läßt sich erfindungsgemäß die sogenannte Flip-Chip-Technik einsetzen. Hierbei erfolgt die Kontaktierung auf der Unterseite des Chips und die Lichtabgabe auf der Oberseite. Bei dieser Lösung ist die Verwendung von gebondeten Anschlußdrähten entbehrlich, nachdem eine direkte Kontaktierung beispielsweise durch Auflöten erfolgen kann.

Die erfindungsgemäße metallische Wärmeleitverbindung kann in beliebiger geeigneter Weise hergestellt werden- Beispielsweise kann auch der Basiskörper an sich zweischichtig aufgebaut sein, und zwar mit einer metallischen Oberflächenschicht und einer keramischen Basis. Auch bei dieser Lösung kann noch eine recht große Wärmekapazität erfindungsgemäß eingesetzt werden, insbesondere, wenn die metallische Oberflächenschicht den Keramikkörper und/oder Siliciumkörper vollständig umhüllt und die Wärmeverteilung insofern verbessert ist. Es kann aber auch eim Aluminiumkörper eingesetzt werden.

In einer weiteren, besonders günstigen Ausgestaltung ist es vorgesehen, den Basiskörper im wesentlichen kalottenförmig auszubilden, und zwar mit einer Form, die exakt in die Fassung für eine bislang verwendete Halogen-Glühlampe mit Reflektor passt. Die Fassung weist an ihrer Außenseite Kühlrippen auf, und bevorzugt ist der Basiskörper dann über Wärmeleitpaste mit der Fassung verbunden. Ein Austausch ist während der Lebensdauer des Lichthärtgeräts in der Regel nicht erforderlich, nachdem LED-Chips eine ausgesprochen lange Lebensdauer aufweisen, so dass sich Einsparungen bei den Wartungskosten gegenüber den Lichthärtgeräten mit Halogen- Glühlampe ergeben. Insbesondere ist auch faktisch ausgeschlossen, dass der Abbruch eines Polymerisationsvorgangs erst durch ein Durchbrennen der Glühlampe erzwungen wird, so dass eine halbgehärtete Füllung vorliegt, die entfernt werden müsste.

In einer weiteren, besonders günstigen Ausgestaltung der erfindungsgemäßen Lösung ist es vorgesehen, die abgegebene Lichtstrahlung durch einen Prismenkörper auf eine querschnittsreduzierte Fläche zu intensivieren. Der erfindungsgemäße Prismenkörper ist so gestaltet, dass er die von den Einzel-Strahlungsquellen im Außenbereich des Basiskörpers emittierte Lichtstrahlung zur Mitte hin verlagert, so dass sie nahezu verlustfrei in den Lichtleitstab eingeleitet werden können. Auch dieser Prismenkörper kann außen von einem Kühlkörper umgeben sein, der an seinem Außenumfang Längsrippen aufweist, die die Wärmeabfuhr verbessern.

Besonders günstig ist es in einer erfindungsgemäßen Ausgestaltung, wenn der Basiskörper samt integrierter Einzel-LED-Chips als Ersatz für eine Halogen-Glühlampe mit Reflektor in einem bestehenden Hand-Lichthärtgerät eingesetzt wird. Bei dieser Lösung weist der Basiskörper genau die Außenform auf, die der Innenfläche der Fassung für die Halogen-Glühlampe entspricht. Er ist bevorzugt als abgeschnittene Kalotte ausgebildet, und Anschlussstifte sind an der Stelle vorgesehen, an der sie auch bei einer Reflektor-Halogenglühlampe vorgesehen sind. Beim Ersatz einer Halogen-Glühlampe mit 50 W durch einen entsprechend erfindungsgemäß ausgestalteten Basiskörper lässt sich die abgegebene Lichtleistung bei gleicher elektrischer Leistungsaufnahme wesentlich verbessern. Wenn das Lichthärtgerät programmgesteuert arbeitet, sind beim Austausch der Reflektorglühlampe durch den erfindungsgemäßen Basiskörper die Aushärtzeiten entsprechend gekürzt, beispielsweise auf die Hälfte oder sogar ein Drittel, was dem Zahnarzt als Zeiteinsparung zugute kommt.

Weitere Einzelheiten, Vorteile und Merkmale ergeben sich aus der nachfolgenden Beschreibung eines Ausführungsbeispiels anhand der Zeichnung.

Es zeigen:
- Fig. 1: eine Ansicht eines Details eines erfindungsgemäßen Lichthärtgeräts, nämlich des Basiskörpers in perspektivischer Darstellung;
- Fig. 2: der Basiskörper gemäß Fig. 1 in der Seitenansicht;
- Fig. 3: der Basiskörper gemäß Fig. 1 in einer Fassung eines Lichthärtgeräts eingebauten Zustands;
- Fig. 4: ein Schnitt durch eine Mulde in einem Basiskörper gemäß Fig. 1, wobei eine Einzel-Strahlungsquelle dargestellt ist;
- Fig. 5: ein Prismenkörper für ein erfindungsgemäßes Lichthärtgerät; und
- Fig. 6: die Lichteinheit für ein erfindungsgemäßes Lichthärtgerät, die einen erfindungsgemäßen Basiskörper, den Prismenkörper und einen Lichtleitstab aufweist.

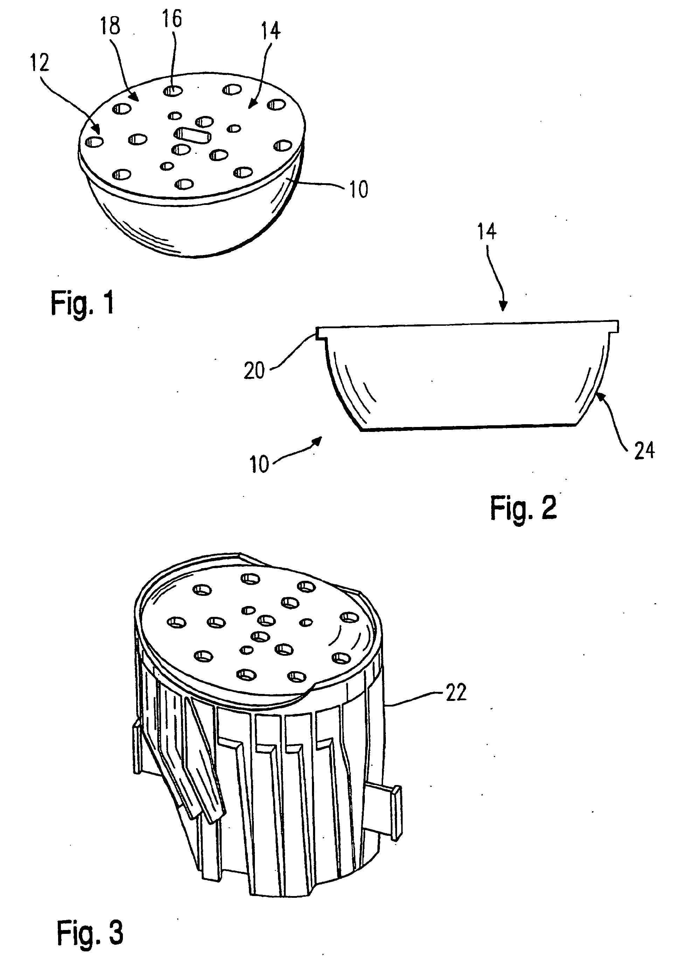

Ein erfindungsgemäßes Lichthärtgerät weist einen Basiskörper 10 auf, der mit einer Mehrzahl von Halbleiter-Strahlungsquellen 12 an seiner Oberseite 14 bestückt ist. Die Halbleiter-Strahlungsquellen 12 sind je am Grunde von Mulden 16 befestigt und gegenüber der Oberfläche 18 versenkt. In dem dargestellten Ausführungsbeispiel sind 12 Strahlungsquellen 12 vorgesehen, die über die Oberseite 14 des Basiskörpers 10 gleichmäßig verteilt sind. Sie sind je mit Silberlot in den Mulden aufgelötet, wie es besser aus Fig. 3 ersichtlich ist.

Erfindungsgemäß ist es besonders günstig, wenn die Beleuchtungsstärke von mindestens 200 mW/cm², insbesondere von mindestens 300 mW/cm², verwendet wird. Besonders günstig ist es, wenn eine blaue oder weiße Halbleiter-Strahlungsquelle mit einer Lichtstärke von 1.000 oder sogar 3.000 mcd verwendet wird. Erfindungsgemäß weisen derartige. LED-Chips ein Strahlungsmaximum auf, dessen. Wellenlänge dem Empfindlichkeits- maximum der üblichen lichthärtenden Dentalkünststoffe entspricht. Hierdtirch lässt sich mit einem recht geringen

Energieeinsatz eine intensive Lichthärtung bereitstellen.

Der Basiskörper 10 besteht in dem dargestellten Ausführungsbeispiel aus einer Aluminium-/Magnesiumlegierung Wie AlMg3, der an der Oberfläche galvanisch versilbert ist. Die. Stärke der Biiberschicht beträgt 10 bis 15 Mikrometer.

Demgegenüber beträgt die Stärke der Lötschicht für die Herstellung einer metallischen Wärmeleitverbindung deutlich mehr, beispielsweise 100 Mikrometer.

Der Basiskörper 10 weist - wie es auch aus Fig. 2 ersichtlich ist - eine - abgesehen von den. Mulden 16 - plane Oberseite 14 auf. Er weist die Form einer abgeschittenen Kügelkalotte auf wobei ein vorspringender Rand 20 zur Verbesserung der seitlichen Abstützung vorgesehen ist.

Aus Fig. 3 ist ersichtlich, in welcher Weise der Basiskörper 10 in einer Fassung 22 aufgenommen sein kann. Die Fassung ist an ihrer Außenseite mit Kühlrippen versehen und bevorzugt entspricht ihre Innenfläche genau der Außenfläche 24 des Kugelkalottenabschnitts des Basiskörpers 10: Bei Bedarf kann der Wärmeübergang zwischen dem Basiskörper 10 und der gekühlten Fassung 22 noch durch Verwendung von Wärmeleitpaste verbessert werden.

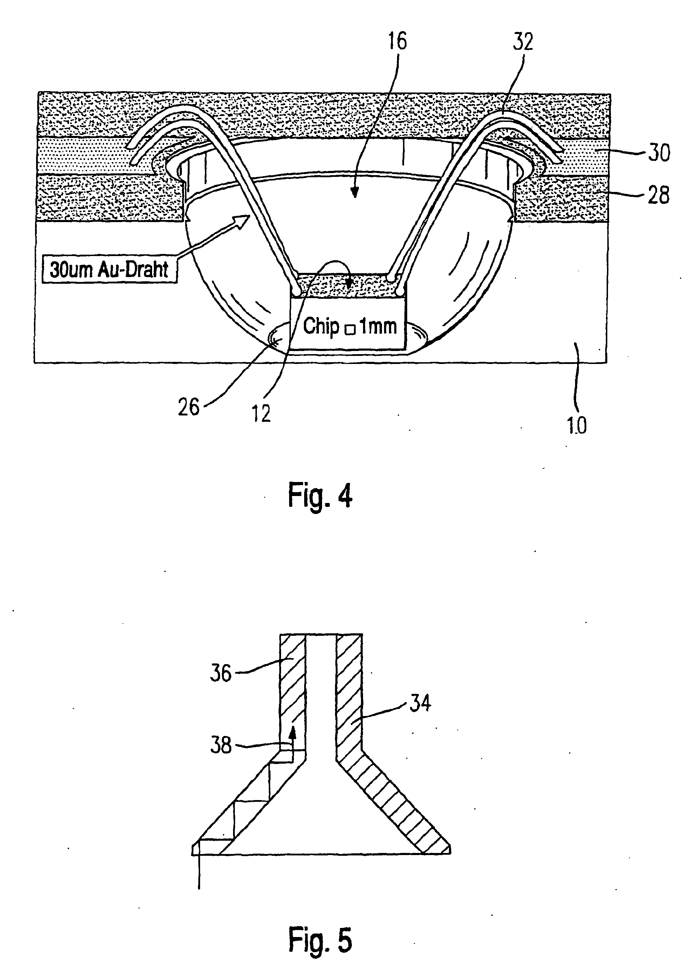

Aus Fig. 4 ist ersichtlich, in welcher Weise ein Chip oder eine Einzel-Strahlungsquelle 12 in einer Mulde 16 aufgenommen sein kann. Die Mulde 16 hat die Form eines Reflektors, wobei der Chip etwa im Brennpunkt des Reflektors angeordnet ist. Die Mulde weist eine flache Grundfläche 26 auf, deren Abmessungen den Abmessungen des Chips 12 entsprechen. Der Chip ist dort mit Silberlot aufgelötet, so dass eine metallische Wärmeleitverbindung zwischen dem Chip und dem Basiskörper 10 besteht.

Auf der Oberseite des Basiskörpers 10 ist den Mulden 16 benachbart je eine Leiterplatte 28 vorgesehen, die Leiterbahnen 30 aufweist, die der Spannungsversorgung dienen. Über an sich bekannte Anschlussdrähte 32 ist jeder Chip mit den Leiterbahnen 30 verbunden. In dem dargestellten Ausführungsbeispiel sind für jede Seite zwei Anschlussdrähte 32 vorgesehen, um den Spannungsabfall und hiermit einhergehende Verluste bei der Stromversorgung des Chips zu reduzieren.

Aus Fig. 5 ist ein Prismenkörper 34 ersichtlich, der der Zusammenfassung der emittierten Lichtstrahlung dient. Durch den Prismenkörper werden Lichtstrahlen, die von Chips ausgesendet werden, die am Außenumfang des Basiskörpers angeordnet sind, mehrfach treppenförmig reflektiert, so dass sie in einen zentralen Bereich 36 und in den dort vorgesehenen Ausgangsstutzen 38 gelangen. Der Prismenkörper dient insofern der Intensivierung der Lichtabstrahlung und Erhöhung der Beleuchtungsdichte und ist an einen aus Fig..6 dargestellten Lichtleitstab 40 angeschlossen.

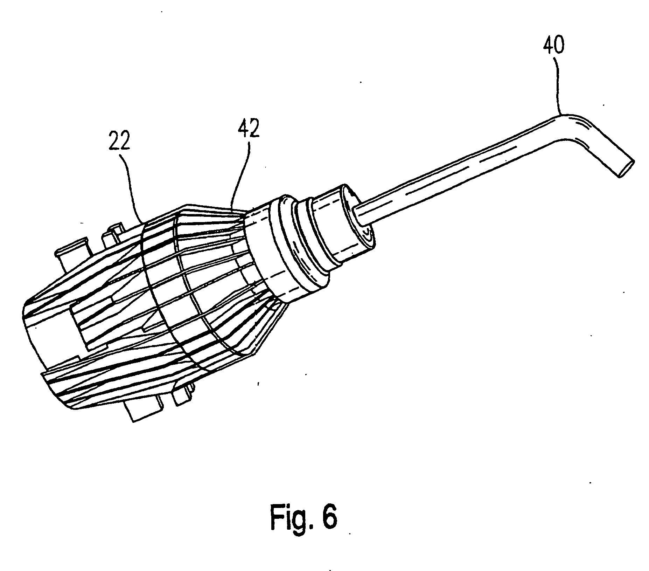

Wie weiter aus Fig. 6 ersichtlich ist, ist die Einheit aus Basiskörper 10 und Prismenkörper 34 von einer Fassung umgeben, die aus der Fassung 22 und einer Gegenfassung 42 besteht.

Beide Fassungen 22 und 42 sind an ihrer Außenseite mit in Längsrichtung verlaufenden Kühlrippen versehen, die der Verbesserung der Wärmeabgabe dienen. Durch die metallische Verbindung zwischen Fassung 22 und Gegenfassung 42 ist die Wärmeabgabefläche vergrößert, und ein etwaiger Gebläseluftstrom kann eine besonders intensive Kühlung bereitstellen.

In einer weiteren günstigen Ausgestaltung der erfindungsgemäßen Lösung ist es vorgesehen, dass LEDs mit verschiedenen Intensitätsmaxima eingesetzt werden. So werden z.B. LEDs mit einem Peak bei 440 nm und 470 nm verwendet. Dadurch wird es möglich, einen breiteren Bereich für die Aushärtung des Dentalmaterials abzudecken, da nicht jeder Hersteller von lichthärtenden Dentalmaterialien sein Material auf einen Peak von 470 nm eingestellt hat.

Messungen haben gezeigt, dass die erfindungsgemäßen Lichthärtgeräte eine Lichtstärke von ca. 600 mW/cm² aufweisen, verglichen mit einer Lichtstärke von 1200 mW/cm² für ein herkömmliches Lichthärtgerät nach dem Stand der Technik, das aber bei Verwendung der erfindungsgemäßen Lichthärtgeräte bei kleinerer Lichtstärke eine höhere relative Intensität erzielt wird.

## Patentansprüche

1. Lichthärtgerät, mit einer Halbleiter-Strahlungsquelle, die in dem Lichthärtgerät montiert ist und Strahlung mindestens teilweise im sichtbaren Spektralbereich ausstrahlt und für das Härten einer im Strahlengang liegenden Masse einschaltbar ist, wobei die Strahlung eine Beleuchtungsstärke von mindestens 200, insbesondere von mindestens 300 mW/cm² aufweist und die Halbleiter-Strahlungsquelle (12) in metallischer und/oder keramischer Wärmeleitverbindung mit einem Basiskörper (10) steht,
**dadurch gekennzeichnet, dass** der Basiskörper (10) im rückwärtigen der Halbleiter-Strahlungsquelle (12) gegenüber liegenden Bereich nach der Art einer abgeschnittenen Halbkugel oder Kalotte abgerundet ist, so dass der Basiskörper (10) an einen Kühlkörper angedrückt wird, der insbesondere gebläsegekühlt ist.

2. Lichthärtgerät nach Anspruch 1,
**dadurch gekennzeichnet, dass** der Basiskörper (10) eine plane Oberseite (14) aufweist, wobei angrenzend an der planen Oberseite (14) ein vorspringender Rand (20) vorgesehen ist.

3. Lichthärtgerät nach Anspruch 1,
**dadurch gekennzeichnet, dass** die Halbleiter-strahlungsquelle (12) als eine Mehrfachanordnung von LED-Chips (12) ausgebildet ist, deren Strahlengänge sich überschneiden.

4. Lichthärtgerät nach einem der vorhergehenden Ansprüche,
**dadurch gekennzeichnet, dass** die Halbleiter-Strahlungsquelle (12) als eine Anordnung von Einzel-Strahlungsquellen (12) ausgebildet ist, die auf einem gemeinsamen Basiskörper (10) aufgelötet sind.

5. Lichthärtgerät nach einem der vorhergehenden Ansprüche,
**dadurch gekennzeichnet, dass** die Strahlungsquellen als Chips (12) ausgebildet sind, deren Substrat in metallischem Kontakt mit dem Basiskörper (10) steht.

6. Lichthärtgerät nach einem der- vorhergehenden Ansprüche,
**dadurch gekennzeichnet, dass** der Basiskörper (10) eine metallische Oberfläche aufweist und/oder aus Metall besteht.

7. Lichthärtgerät nach einem der vorhergehenden Ansprüche,
**dadurch gekennzeichnet, dass** der Basiskörper (10) Mulden (16) aufweist, und dass in jeder Mulde (16) ein Chip als Einzel-Strahlungsquelle (12) angebracht ist.

8. Lichthärtgerät nach Anspruch 7,
**dadurch gekennzeichnet, dass** jede Mulde (16) als Mikroreflektor ausgebildet ist und insbesondere mit einer Silberoberfläche beschichtet ist.

9. Lichthärtgerät nach einem der vorhergehenden Ansprüche,
**dadurch gekennzeichnet, dass** jeder Chip mit je zwei Stromversorgungsdrähten für die Zuleitung und für die Ableitung des Versorgungsstroms versehen ist, die insbesondere aus Gold oder Aluminium mit einer Stärke von etwa 30 Mikrometern bestehen.

10. Lichthärtgerät nach einem der vorhergehenden Ansprüche,
**dadurch gekennzeichnet, dass** der Basiskörper (10) eine flache Oberfläche mit Mulden (16) aufweist, die die Einzel-Strahlungsquellen (12) aufnehmen, wobei der Basiskörper (10) im Wesentlichen die Form einer handelsüblichen Reflektor-Halogenlampe aufweist.

11. Lichthärtgerät nach einem der vorhergehenden Ansprüche,
**dadurch gekennzeichnet, dass** vor der Halbleiter-Strahlungsquelle (12) ein Lichtsammler oder Prismenkörper (34) im Strahlungsgang angeordnet ist, der die Strahlengänge der Einzel-Strahlungsquellen (12) zusammenleitet und dessen Lichtausgang eine Querschnittsflache von weniger als 1 cm aufweist.

12. Lichthärtgerät nach einem der vorhergehenden Ansprüche,
**dadurch gekennzeichnet, dass** die Einzel-Strahlungsquellen (12) über Silberlot, insbesondere in einer Schichtstärke von 20 bis 500 µm bevorzugt etwa 100 Mikrometer, auf dem Basiskörper (10) aufgelötet sind.

13. Lichthärtgerät nach einem der vorhergehenden Ansprüche,
**dadurch gekennzeichnet, dass** der Spektralbereich der Strahlungsquellen ein Maximum im Bereich blauen Lichts aufweist und insbesondere auch ultraviolette Strahlung umfasst.

14. Lichthärtgerät nach einem der vorhergehenden Ansprüche,
**dadurch gekennzeichnet, dass** der Basiskörper (10) aus einer Kupfer-/Silberlegierung besteht.

15. Lichthärtgerät nach einem der Ansprüche 1 bis 13,
**dadurch gekennzeichnet, dass** der Basiskörper (10) aus einer Aluminium-/Magnesiumlegierung wie AlMg3, der an der Oberfläche galvanisch versilbert ist, besteht.

16. Lichthärtgerät nach einem der Ansprüche 1 bis 13,
**dadurch gekennzeichnet, dass** der Basiskörper (10) aus einer Keramik besteht, die mit einem metallischen Überzug, insbesondere aus Gold, versehen ist.

17. Lichthärtgerät nach einem der vorhergehenden Ansprüche,
**dadurch gekennzeichnet, dass** Lichthärtgerät an Netzspannung von 110 V bis 250 V anschließbar ist und insbesondere auch Sekundärbatterien zur Energiespeicherung aufweist.

18. Lichthärtgerät nach einem der vorhergehenden Ansprüche,
**dadurch gekennzeichnet, dass** als Einzel-Lichtquellen Laserdioden eingesetzt sind.

19. Lichthärtgerät nach einem der vorhergehenden Ansprüche,
**dadurch gekennzeichnet, dass** der Basiskörper. (10) an seinem rückwärtigen Bereich zwei Steckkontakte aufweist, die in die Fassung einer Halogen-Reflektorlampe einsteckbar sind.

## Revendications

1. Appareil à photopolymériser, avec une source de rayonnement à semi-conducteurs qui est montée dans l'appareil à photopolymériser et qui émet un rayonnement au moins partiellement dans le domaine spectral visible et qui peut être allumé pour le durcissement d'une masse se trouvant dans la trajectoire du rayonnement, dans lequel le rayonnement présente une intensité lumineuse d'au moins 200, en particulier d'au moins 300 mW/cm², et la source de rayonnement à semi-conducteurs (12) est en conduction thermique, par l'intermédiaire de métal et/ou de céramique, avec un corps de base (10),
**caractérisé en ce que** le corps de base (10), dans la partie arrière opposée à la source de rayonnement à semi-conducteurs (12), est arrondi à la manière d'un hémisphère ou d'une calotte tronqué, de sorte que le corps de base (10) est appuyé contre un dissipateur de chaleur qui est refroidi en particulier par un ventilateur.

2. Appareil à photopolymériser selon la revendication 1, **caractérisé en ce que** le corps de base (10) présente une face supérieure plane (14), dans lequel un bord saillant (20) est prévu adjacent à la face supérieure plane (14).

3. Appareil à photopolymériser selon la revendication 1, **caractérisé en ce que** la source de rayonnement à semi-conducteurs (12) est réalisée en tant qu'arrangement multiple de puces LED (12) dont les trajectoires de rayonnement se croisent.

4. Appareil à photopolymériser selon l'une quelconque des revendications précédentes,
**caractérisé en ce que** la source de rayonnement à semi-conducteurs (12) est réalisée en tant qu'arrangement de sources de rayonnement individuelles (12) qui sont brasées sur un corps de base (10) commun.

5. Appareil à photopolymériser selon l'une quelconque des revendications précédentes,
**caractérisé en ce que** les sources de rayonnement sont réalisées en tant que puces (12) dont le substrat est en contact métallique avec le corps de base (10).

6. Appareil à photopolymériser selon l'une quelconque des revendications précédentes,
**caractérisé en ce que** le corps de base (10) présente une surface métallique et/ou est composé de métal.

7. Appareil à photopolymériser selon l'une quelconque des revendications précédentes,
**caractérisé en ce que** le corps de base (10) présente des cavités (16) et **en ce que** dans chaque cavité (16) se trouve une puce en tant que source de rayonnement individuelle (12).

8. Appareil à photopolymériser selon la revendication 7,
**caractérisé en ce que** chaque cavité (16) est réalisée en tant que microréflecteur et qu'elle est revêtue en particulier d'une surface en argent.

9. Appareil à photopolymériser selon l'une quelconque des revendications précédentes,
**caractérisé en ce que**, pour l'amenée et la dérivation du courant d'alimentation, chaque puce est pourvue respectivement de deux fils d'alimentation en courant qui sont faits en particulier d'or ou d'aluminium ayant une épaisseur d'environ 30 micromètres.

10. Appareil à photopolymériser selon l'une quelconque des revendications précédentes,
**caractérisé en ce que** le corps de base (10) présente une surface plane avec des cavités (16) qui logent les sources de rayonnement individuelles (12), dans lequel le corps de base (10) a essentiellement la forme d'une lampe halogène à réflecteur du commerce.

11. Appareil à photopolymériser selon l'une quelconque des revendications précédentes,
**caractérisé en ce qu'**un collecteur de lumière ou un corps prismatique (34) est disposé devant la source de rayonnement à semi-conducteurs (12) dans la trajectoire du rayonnement, lequel concentre les trajectoires de rayonnement des sources de rayonnement individuelles (12) et dont la sortie de lumière présente une section transversale inférieure à 1 cm.

12. Appareil à photopolymériser selon l'une quelconque des revendications précédentes,
**caractérisé en ce que** les sources de rayonnement individuelles (12) sont brasées sur le corps de base (10) à l'aide d'argent de brasage, en particulier avec une épaisseur de couche de 20 à 500 ?m, de préférence d'environ 100 micromètres.

13. Appareil à photopolymériser selon l'une quelconque des revendications précédentes,
**caractérisé en ce que** le domaine spectral des sources de rayonnement présente un maximum dans le domaine de la lumière bleue et comprend également en particulier le rayonnement ultraviolet.

14. Appareil à photopolymériser selon l'une quelconque des revendications précédentes,
**caractérisé en ce que** le corps de base (10) est composé d'un alliage cuivre-argent.

15. Appareil à photopolymériser selon l'une quelconque des revendications 1 à 13,
**caractérisé en ce que** le corps de base (10) est composé d'un alliage aluminium-magnésium tel que AlMg3, qui est argenté sur la surface par dépôt électrolytique.

16. Appareil à photopolymériser selon l'une quelconque des revendications 1 à 13,
**caractérisé en ce que** le corps de base (10) est composé d'une céramique qui est pourvue d'un revêtement métallique, en particulier d'or.

17. Appareil à photopolymériser selon l'une quelconque des revendications précédentes,
**caractérisé en ce que** l'appareil à photopolymériser peut être raccordé à une tension du réseau de 110 V à 250 V et il présente en particulier des accumulateurs pour stocker de l'énergie.

18. Appareil à photopolymériser selon l'une quelconque des revendications précédentes,
**caractérisé en ce que** des diodes laser sont mises en oeuvre en tant que sources de lumière individuelles.

19. Appareil à photopolymériser selon l'une quelconque des revendications précédentes,
**caractérisé en ce que** le corps de base (10) présente, sur sa partie arrière, deux contacts à fiches qui peuvent être enfichés dans la douille d'une lampe halogène à réflecteur.

## Claims

1. A light-curing apparatus with a semiconductor radiation source, which is mounted in the light-curing apparatus and emits radiation at least partly in the visible spectral region and for the curing operation a compound situated in the light path can be used, wherein the radiation has an illuminance of at least 200, in particular of at least 300 mW/cm², and the semiconductor radiation source (12) is in metallic and/or ceramic heat-conducting communication with a base member (10),
**characterised in that** in the rearward zone situated opposite the semiconductor radiation source (12) the base member (10) is rounded in the manner of a cut-off hemisphere or cap so that the base member (10) is pressed against a cooling body which, in particular, is fan-cooled.

2. A light-curing apparatus according to Claim 1,
**characterised in that** the base member (10) has a flat upper side (14), a projecting rim (20) being provided adjacent the flat, upper side (14).

3. A light-curing apparatus according to Claim 1,
**characterised in that** the semiconductor radiation source (12) is in the form of a multiple array of LED chips (12), the light paths of which intersect.

4. A light-curing apparatus according to any one of the preceding Claims, **characterised in that** the semiconductor radiation source (12) is in the form of an array of individual radiation sources (12) which are soldered on a common base member (10).

5. A light-curing apparatus according to any one of the preceding Claims, **characterised in that** the radiation sources are in the form of chips (12), the substrate of which is in metallic contact with the base member (10).

6. A light-curing apparatus according to any one of the preceding Claims, **characterised in that** the base member (10) has a metallic surface and/or consists of metal.

7. A light-curing apparatus according to any one of the preceding Claims, **characterised in that** the base member (10) has depressions (16), and **in that** a chip is installed in each depression (16) as an individual radiation source (12).

8. A light-curing apparatus according to Claim 7,
**characterised in that** each depression (16) is in the form of a microreflector and, in particular, is coated with a silver surface.

9. A light-curing apparatus according to any one of the preceding Claims, **characterised in that** each chip is provided with two power-supply wires for the inlet and for the outlet of the supply current, which in particular consist of gold or aluminium with a thickness of approximately 30 micrometres.

10. A light-curing apparatus according to any one of the preceding Claims, **characterised in that** the base member (10) has a flat surface with depressions (16) which accommodate the individual radiation sources (12), wherein the base member (10) is substantially in the form of a commercially available reflective halogen bulb.

11. A light-curing apparatus according to any one of the preceding Claims, **characterised in that** in front of the semiconductor radiation source (12) a light collector or prismatic body (34) is disposed in the radiation path, which brings together the light paths of the individual radiation sources (12) and the light output of which has a cross-sectional area of less than 1 cm.

12. A light-curing apparatus according to any one of the preceding Claims, **characterised in that** the individual radiation sources (12) is soldered to the base member (10) using silver solder, particularly in a layer thickness of 20 to 500 *µ*m, preferably approximately 100 micrometres.

13. A light-curing apparatus according to any one of the preceding Claims, **characterised in that** the spectral region of the radiation sources exhibits a maximum in the region of blue light and, in particular, also comprises ultraviolet radiation.

14. A light-curing apparatus according to any one of the preceding Claims, **characterised in that** the base member (10) consists of a copper/silver alloy.

15. A light-curing apparatus according to any one of Claims 1 to 13, **characterised in that** the base member (10) consists of an aluminium/magnesium alloy, such as AlMg3, which is silver-plated on the surface.

16. A light-curing apparatus according to any one of Claims 1 to 13, **characterised in that** the base member (10) consists of a ceramic material which is provided with a metallic coating, in particular of gold.

17. A light-curing apparatus according to any one of the preceding Claims, **characterised in that** the light-curing apparatus can be connected to mains voltage of 110 V to 250 V and, in particular, has secondary batteries for energy storage.

18. A light-curing apparatus according to any one of the preceding Claims, **characterised in that** laser diodes are used as individual light sources.

19. A light-curing apparatus according to any one of the preceding Claims, **characterised in that** in its rearward zone the base member (10) has two plug contacts which can be inserted into the socket of a halogen reflector lamp.
